# EUROPEAN PATENT SPECIFICATION

(11) **EP 3 163 523 B1**
(45) Date of publication and mention of the grant of the patent: **24.07.2019**
(21) Application number: 15777077.7
(22) Date of filing: 07.04.2015
(51) Int. Cl.: H01H 50/20, H02J 7/35, H04W 4/029, H04W 4/33, G07G 1/00, G07F 7/06

(54) **SHOPPING TROLLEY CONTROL AND MANAGEMENT SYSTEM**
EINKAUFSWAGENSTEUERUNGS- UND -VERWALTUNGSSYSTEM
SYSTÈME DE CONTRÔLE ET DE GESTION DE CHARIOTS DE SUPERMARCHÉ

(30) Priority: 09.04.2014 ES 201430531
(43) Date of publication of application: 03.05.2017
(73) Proprietor: Quintero Traverso, José Antonio, 11519 Puerto Real (Cadiz) (ES); Quintero Traverso, Enrique Alfonso, 11519 Puerto Real (ES); Reina Rodríguez, José Manuel, 11519 Puerto Real (ES)
(72) Inventor: Quintero Traverso, José Antonio, 11519 Puerto Real (Cadiz) (ES); Quintero Traverso, Enrique Alfonso, 11519 Puerto Real (ES); Reina Rodríguez, José Manuel, 11519 Puerto Real (ES)
(74) Representative: Pons Ariño, Angel
(86) International application number: PCT/ES2015/070275
(87) International publication number: WO 2015/155397

(56) References cited:
- EP-A2- 0 374 877
- WO-A1-98/51197
- WO-A1-2006/087070
- WO-A2-2006/102183
- WO-A2-2006/102183
- DE-A1-102009 045 935
- FR-A1- 2 746 529
- GB-B- 2 391 098
- US-A1- 2002 161 651
- US-B2- 7 183 910

## Description

### OBJECT OF THE INVENTION

The present invention relates to a system and a method for controlling and managing shopping trolleys, applicable to corporate trolleys, that is, those that belong to an entity, typically a commercial area, offering them to their customers to transport purchases.

### BACKGROUND OF THE INVENTION

It is of interest tracking of customer's purchasing routines in shops and malls, in order to know their habits and adapt the offer to them. These tracking are currently made based on the information recorded in the cash registers in sales made, or by personal surveys.

Information on sales records provides data of operations executed, but not of potential operations. Effectively, it is recorded that the customer has purchased certain articles, but there is no information about others articles by which he/she could be interesting and finally they have not been purchased, especially less-everyday articles and with higher cost. To obtain these data, personal surveys would mainly serve, but the same are per formed in a limited universe since by reasons obvious they cannot be performed to all customers of the supermarket or mall.

On the other hand, virtually all commercial surfaces have trolleys where customers can bring their purchases from point of sale to their vehicles. These trolleys do not have another utility additional that it commented, and also are frequent source of thefts, so over the years, antitheft devices of nature mechanical have been implemented, where each trolley implements an attachment box, with a chain terminated as a key that is inserted into the rear trolley box, then allowing the release of a coin that has been previously introduced in order to be able to release the trolley.

Trolleys are parked in one or more parkings for trolleys, hooked with one another through their attachment boxes. To take one of them the corresponding coin in entered into the attachment box, and when the trolley is left, the key from previous trolley is entered, or the initial of trolley parking, to retrieve the coin, leaving the trolley coupled to the rest.

These mechanical systems have the problem of being easily releasable with a rounded tool, so they already have left of fulfil its function. Also, they do not complement its function with other benefits of control of passage of the trolley through the checkout, use time control, is it is necessary to provide more trolleys, identification through the user image that takes each trolley, revenue generated by the use of trolley.

Documents WO2006102183, WO2006087070 and WO9851197 disclose most of the features in the preamble of claim 1.

### DESCRIPTION OF THE INVENTION

The invention is defined in independent system claim 1.

The system for controlling and managing shopping trolleys solves the technical problems raised, since it allows on the one hand tracking the particular route made by each trolley of the shop or commercial area, and therefore the sales areas more visited by customers, regardless of purchases. Therefore, the system of the invention has a first function of means for obtaining data from the preferential areas visited by users. It also adds the trolley identification when checking-out, and means for identifying the articles purchased, so the data can be processed later associating the route followed by the trolley and the items purchased.

A further advantage of the system of invention is that the control carried out serves to minimize the trolley thefts.

According to the invention, the system comprises the provision of an ID terminal for each trolley to be controlled, understanding as an ID terminal an electronic module which is capable of carrying a particular ID for each trolley. This ID terminal is ideally programmable in situ, so the invention will preferably also include at least one programmer of the trolley IDs.

The ID terminal, in addition, is equipped with means for communicating with at least one trolley parking bay unit, at least one location-finding system of trolleys based on reception of a signal and, at least one unit for detecting the passage of the trolley through the checkout. Communications are embodied through any wireless communication, preferably through radiofrequency modules (RF) and/or infrared (IR) and/or through network connection, and thus each of the trolleys that are part of the total may be identified, as well as to control routine that it has followed for a period of time, such as the time when it was required, pathway made, and the time that it was left back in the trolley parking, providing enough data to determine the use thereof. Detecting also its passage through the check-out and tracking of the location in the surface commercial. For this location, in addition to the wireless links and/or IR, the invention has planned that additionally can participate by gathering of images through a closed-circuit television (CCTV).

In this way, the system of the invention allows combining all the information collected by the trolley from its extraction until its return to the trolley parking, including the passage through check-out with income contributed in the same, providing enough data that can be statistically processed for a commercial optimization, not forming part said subsequent process of the invention, but only the system and its physical means for obtaining said data. Also it serves as a control means to avoid or decrease the theft of trolleys, due to the deterrence offered by the detection that a trolley is no longer in the scope of the commercial surface.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

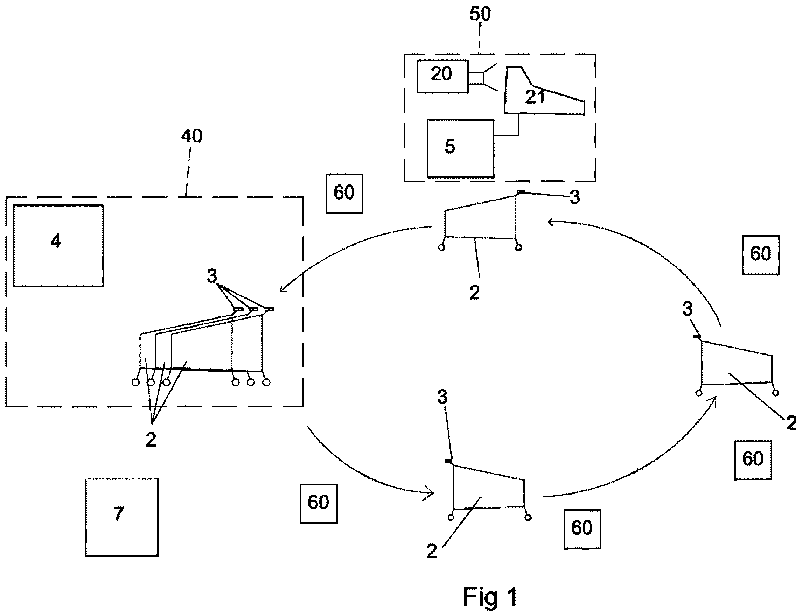

Figure 1.- It shows a schematic view of the system of the invention.

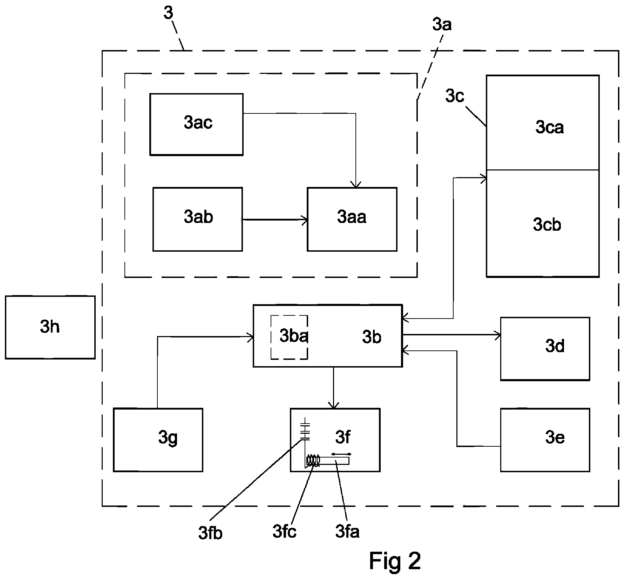

Fig. 2 It shows a block diagram of the ID terminal arranged in each trolley to be controlled.

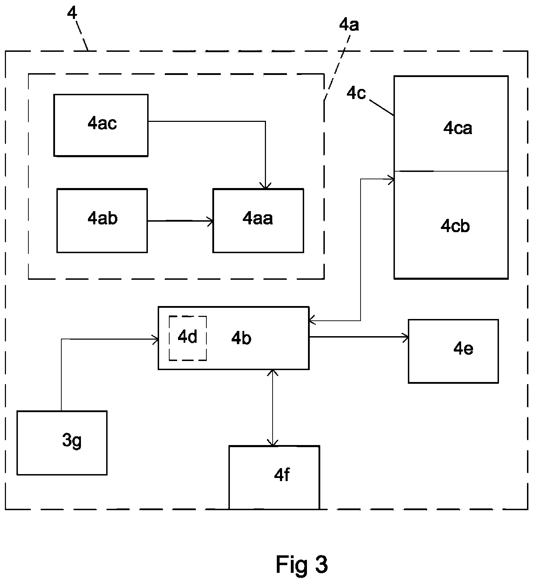

Fig. 3 -It shows a block diagram of the trolley parking bay unit.

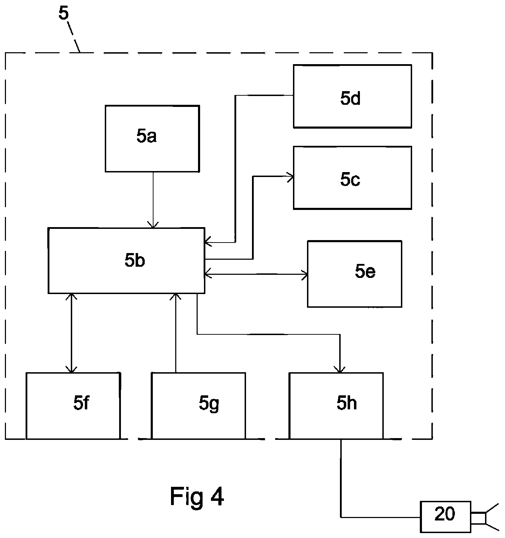

Fig. 4 - It shows a block diagram of the unit for detecting the passage of the trolley through the checkout.

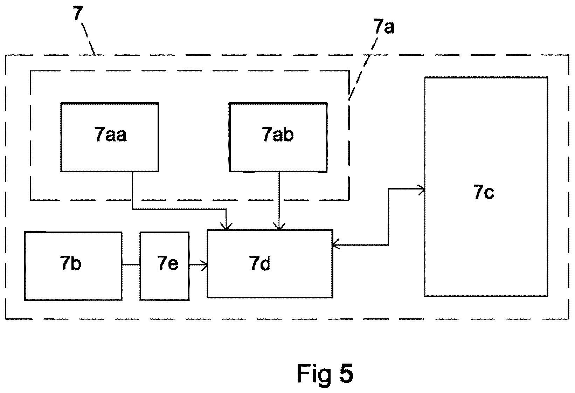

Fig. 5 It shows a block diagram of a programmer of the ID of each trolley.

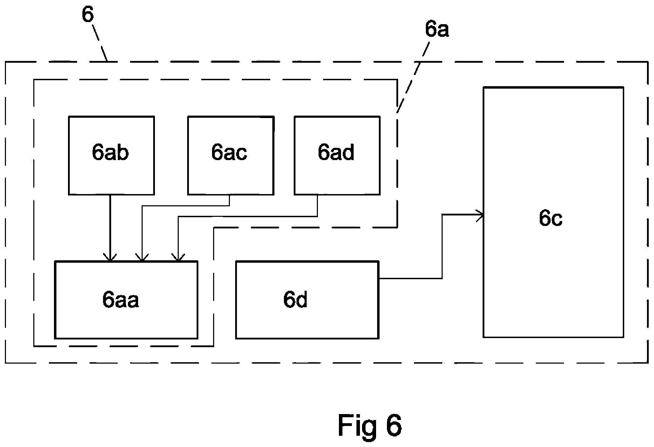

Fig. 6 - It shows a block diagram of the location-finding system.

### PREFERRED EMBODIMENT OF THE INVENTION

The system (1) for controlling and managing shopping trolleys (2) is applied to corporate trolleys, understood as those that belong to an entity, typically a commercial area that offers them to its customers to transport purchases.

According to the invention, the system comprises an ID module (3) for each trolley (2) to be controlled, said terminal being equipped with means for communicating with at least one trolley parking bay unit (4), located in this example in the trolley parking itself (40), at least one location-finding system (6) of trolleys based on the reception of a signal and at least one unit (5) for detecting the passage of the trolley through the checkout, also located in the vicinity of the cash register (50). Communications are ideally embodied through wireless means, preferably through links of RF modules (radio frequency) and infrared IR, and/or network connection in the way that is described below.

ID terminal (3) of each trolley (2) comprises a first power supply (3a), a first embedded system (3b) with memory (3ba) for storing data and the programming of the particular ID -which identifies each trolley-, a first wireless communication module (3c), preferably RF, comprised of emitter (3ca) and receiver (3cb), at least one IR emitter (3d), a coin introduction detector (3e), a coin lock (3f), a key detector (3g), and optionally a barcode reader (3h), while the first power supply (3a) comprises a first switched-mode power supply (3aa) which will power the devices when they need it, and comprising a first rechargeable battery (3ab), typically made of lithium ion or lithium polymer, and a first photovoltaic unit (3ac) such that the photovoltaic unit (3ac) cooperates in recharging the rechargeable battery (3ab). The use of a switched-mode power supply, i.e., based on switched converters, will get extend the life of the first rechargeable battery (3ab). The barcode reader (3h) can be integrated in the ID terminal (3) or externa! and connectable to the same.

This first switched-mode power supply (3aa) and first primer embedded system (3b) are ideally implemented on a double-sided PCB with surface mount encapsulates (SMD), all this to reduce the size and make its mount in the trolley can be located in the attachment boxes between trolleys.

The coin introduction detector (3e) comprises a limit switch operated by the own introduction of the coin, not shown, while the coin lock (3f) comprises a magnetic piston (3fa) energized by a relay (3fc) commanded by the first embedded system (3b), and capacitors (3fb) for supplying supplementary power to the magnetic piston (3fa). The magnetic piston (3fa) retains the coin until the first embedded system (3b) gives the activation order of the same to release the coin.

The trolley parking bay unit (4) comprises a second power supply (4a), a second embedded system (4b) with a clock (4d), a second wireless module (4c), preferably RF with two unidirectional links, emitter (4ca) and receiver (4cb), a first database (4e) for storing movements ideally based on RAM memory and a first interface (4f) usable to dump the data stored in the first database (4e), serving any type of connection and ideally a local network connection.

The second power supply (4a) comprises to second switched-mode power supply (4aa) powered by a second lithium ion or lithium polymer rechargeable battery (4ab) associated with a second photovoltaic unit (4ac), such that the photovoltaic unit (4ac) cooperates in recharging of the rechargeable battery (4ab). Also, the second power supply can be supplied from mains due to its fixed location.

The trolley parking bay unit (4) functions as data management unit, storing a list of all the trolleys parked at any time, as well as their entry and exit time. In addition, the order of coin release is only emitted if the trolley is in its place.

The communication between the wireless modules of the parking bay unit (4) and ID terminals (3) of each trolley (2) parked in the parking allows recording stays and entry and exit schedules. All the data stored in this first database (4e) can be dumped directly to a computer through the first interface (4f).

By its part, each unit (5) for detecting the passage of the trolley through the checkout - one per each cash register- comprises a third power supply (5a), a third embedded system (5b), a third wireless module (5c), preferably RF, a IR receiver (5d) for reception of the signal emitted by the IR emitters (3d) of the trolleys (2), an invoice receipt connection (5g) with the cash register (21), a second database (5e) for storing checkouts - ideally based on RAM memory - and a second interface (5f), preferably of the type of local network, to dump the data stored in the second database (5e). In this case, the third wireless module (5c) is permanently emitting a short range signal, so it only reaches to trolley that checkout (50). The information sent indicates to the ID terminal (3) of the trolley (2) that it is checking-out. At that time the first embedded system (3b) of the ID terminal (3) will manage a routine that will include the emission of its ID and how much data is able to store through its IR emitter or emitters (3d), which will be read by the IR receiver (5d) of the unit (5) for detecting the passage of the trolley through the checkout, which will record the movement in the second database (5e) as well as information of the invoice obtained through the invoice receipt connection (5g). The ID terminal (3) can have more than one IR emitter (3d), one by each side e.g., in places where the approximation to cash registers can be made by both sides, in order to be able to dump the information regardless of whether the cash register is located to the right side or to the left side of the trolley (2).

If the user has registered the items chosen by the barcode reader (3h) of the ID terminal (3) in his/her trolley (2), option existing at some stores to make a self-reading of purchases and take less in the checkout, the first embedded system (3b) of the ID terminal (3) will include this information in that transmitted to the IR receiver (5d). This feature is also useful to know which products takes customer and, above all, which products he/she leaves, as well as to know the sum of the amounts of the products in the trolley. In addition, distributing checking out units (5) inside the commercial surface before the actual cash registers, for example in the columns of the malls, where there are article barcode readers, data dumping can be made in the same, retaining this information until checkout, to check what it is registered in cash register and what it is not registered, and check against the previously registered information.

All data stored in this second database (5e), of each cash register, can be dumped directly to a computer via the second interface (5f).

Also, the unit (5) for detecting the passage of the trolley through the checkout may comprise a connection (5h) to a closed-circuit television (CCTV) image gathering system (20).

The location-finding system (6) comprises a plurality of beacons (60), each of them comprising a fourth power supply (6a), a fourth embedded system (6b), a fourth wireless module (6c), preferably RF, and a third interface (6f). The fourth wireless module (6c) of each beacon (60) will allow, when linked to the wireless module (3c) of the ID terminal (3) of each trolley (2), detecting the specific location of the trolley (2) dividing the commercial surface in study areas, each of them controlled by a beacon (60). A change of area involves detecting the change of beacon (60) by the trolley ID terminal (3), and the record of the corresponding data, in its first memory (3ba), that can be dumped through the first wireless module (3c). It is therefore of a register by areas, not by coordinates. Also the location-finding system may be implemented by any coordinate location-finding system, detailing here only a constitution very preferential for this embodiment of the invention.

The fourth power supply (6a) ideally comprises a fourth switched-mode power supply (6aa) and may be supplied from a fourth lithium ion or polymer lithium rechargeable battery (6ab) associated with a third photovoltaic unit (6ac), or from mains (6ad) given its fixed location.

In order to improve the benefits and costs of the system, it is envisaged that the programming of the ID of trolleys and/or beacons (60) is not carried out in hardware, what would imply realization in factory, but is preferably programmable in situ. For this reason, the invention also comprises one or more programmers (7) of the ID terminals (3) of the trolleys (2), comprising a fourth interface (7a) - which usually includes a keyboard (7aa) and a screen (7ab) for entering manual data, a third battery (7b), a fifth ideally in switched-mode, power supply (7e), a fifth wireless module (7c) and a fifth embedded system (7d). The communication with the ID terminals (3) of the trolleys (2) and/or beacons (60) is carried out through their respective wireless modules (3c, 6c, 7c). The data to be entered into the ID terminals (3) will be at least the individual identification; in the beacons (60) will be at least the individual identification, date and time.

The operation of the system comprises algorithms which form part of the invention, since the produce technical effects, such as the release of coins, control of trolley passage through all commercial surface, taking pictures, etc. that are part of the solution to technical problems raised. These algorithms comprise:
an algorithm for combined control of trolley output implemented in the ID terminal (3) and the parking bay unit (4), comprising the following steps:
   - continuously emitting a beacon identifier, time and date through the fourth wireless module (6c) of each beacon (60),
   - reading the beacon identifier, time and date through the first wireless module (3c) of the ID terminal (3) of each trolley (2),
   - recording in the memory (3ba) of the ID terminal (3) of trolley (2) the beacon identifier, time and date
an algorithm for combined control of passage of the trolley through the checkout implemented in the ID terminal (3) and the unit (5) for detecting the passage of the trolley through the checkout, comprising the following steps:
   - continuously emitting an activation order from the trolley IR emitter (3d) through the third wireless module (5c) of the unit (5) for detecting the passage of the trolley through the checkout,
   - reading the activation order from the IR emitter through the first wireless module (3c) of the ID terminal (3) of each trolley (2)
   - emitting the ID and remaining data stored in the memory (3ba) of the ID terminal (3) (trolley removal schedule, route or areas visited with schedule, products registered by the barcode reader), through the trolley IR emitter (3d),
   - reading the invoice data through the invoice receipt connection (5g) with the cash register (21),
   - recording the ID, trolley data and invoice data in the second database (5e).

In addition, this algorithm may implement a step of gathering CCTV images (20), if available.

An algorithm for combined control of trolley input implemented in the ID terminal (3) and the trolley parking bay unit (4), comprising the following steps:
- detecting the introduction of the key through the key detector (3g),
- emitting the input record request through the first wireless module (3c) of the ID terminal (3) of trolley (2),
- reading the trolley input record request through the second wireless module (4c) of the trolley parking bay unit (4),
- recording the request in the first database (4e),
- emitting order acceptance through the second wireless module (4c) of the trolley parking bay unit (4),
- receiving acceptance from the trolley parking bay unit (4) through the first wireless module (3c) of the ID terminal (3) of trolley (2),
- activating the coin lock (3f).

Despite the above, and since the description made only corresponds to preferred embodiments of the invention, it is understood that within its essentiality, multiple detail variations may be made, also protected, which may affect the shape, size, or manufacturing materials of the whole or its parts, without involving any alteration of the invention as a whole, limited only by the claims provided below.

## Claims

1. System (1) for controlling and managing shopping trolleys (2), the system (1) comprising an ID terminal (3) for each trolley (2) to be controlled, said ID terminal (3) being equipped with:
- means for communicating with at least one trolley parking bay unit (4), with at least one location-finding system (6), and with at least one unit (5) for detecting the passage of the trolley through the checkout,
- a first power supply (3a),
- a first embedded system (3b) with memory (3ba) for storing data and ID programming,
- a first wireless module (3c),
- at least one IR emitter (3d),
- a coin introduction detector (3e),
- a coin lock (3f) and
- a key detector (3g), for detecting the key of another trolley (2), the key being intended to attach / detach one trolley (2) to / from a set of connected trolleys (2), the system (1) being such that the coin lock (3f) comprises a magnetic piston (3fa),
wherein the system (1) further comprises:
- a relay (3fc), the first embedded system being adapted to command the relay to energize the magnetic piston (3fa); and
- capacitors (3fb) for supplying supplementary power to the magnetic piston (3fa).

2. System (1) for controlling and managing shopping trolleys (2), according to claim 1, **characterized in that** the ID terminal (3) further comprises a barcode reader (3h).

3. System (1) for controlling and managing shopping trolleys (2), according to claims 1 or 2, **characterized in that** the first power supply (3a) comprises:
- a first switched-mode power supply (3aa), and
- a first rechargeable battery (3ab) and a first photovoltaic unit (3ac), for powering the first switched-mode power supply (3aa).

4. System (1) for controlling and managing shopping trolleys (2), according to claim 3, **characterized in that** the first switched-mode power supply (3aa) and first embedded system (3b) are implemented in a PCB board.

5. System (1) for controlling and managing shopping trolleys (2), according to any of claims 1-4, **characterized in that** the coin introduction detector (3e) comprises a limit switch.

6. System (1) for controlling and managing shopping trolleys (2), according to any of preceding claims, the system comprising the at least one trolley parking bay unit, the system being **characterized in that** the at least one trolley parking bay unit comprises:
- a second power supply (4a),
- a second embedded system (4b) with a clock (4d),
- a second wireless module (4c),
- a first data base (4e) for storing movements and
- a first interface (4f) for dumping data stored in the first data base (4e).

7. System (1) for controlling and managing shopping trolleys (2), according to claim 6, **characterized in that** the second power supply (4a) comprises:
- a second switched-mode power supply (4aa); and
- a second rechargeable battery (4ab) for powering the second switched-mode supply (4aa), in association with a second photovoltaic unit (4ac).

8. System (1) for controlling and managing shopping trolleys (2), according to any of preceding claims, the system comprising the unit for detecting the passage of a trolley through a checkout, the system being **characterized in that** the unit (5) for detecting the passage of the trolley through the checkout comprises: a third power supply (5a), a third embedded system (5b), a third wireless module (5c), a IR receiver (5d) for reception of a signal emitted by a IR emitter (3d) of each trolley (2), an invoice receipt connection (5g) for connecting the cash register (21), a second database (5e) for storing checkouts, and a second interface (5f) for dumping checkout data stored in the second database (5e).

9. System (1) for controlling and managing shopping trolleys (2), according to claim 8, **characterized in that** the unit (5) for detecting the passage of the trolley through the checkout further comprises a connection (5h) to a CCTV image-gathering system (20).

10. System (1) for controlling and managing shopping trolleys (2), according to any of preceding claims, the system comprising the location finding system, the system being **characterized in that** the location-finding system (6) comprises a plurality of beacons (60), each of them comprising a fourth power supply (6a), a fourth embedded system (6b), a fourth wireless module (6c), and a third interface (6f).

11. System (1) for controlling and managing shopping trolleys (2), according to claim 10, **characterized in that** the fourth power supply (6a) comprises:
- a fourth switched-mode power supply (6aa), and
- a fourth rechargeable battery (6ab), a third photovoltaic unit (6ac) and/or mains (6ad), for powering the fourth switched-mode power supply (6aa).

12. System (1) for controlling and managing shopping trolleys (2), according to any of preceding claims, **characterized in that** it further comprises a programmer (7) for programming ID terminals (3) of each trolley (2) and/or beacons (60) of each trolley (2).

13. System (1) for controlling and managing shopping trolleys (2), according to claim 12, **characterized in that** the programmer (7) comprises a fourth interface (7a) for entering manual data, a third battery (7b), a fifth wireless module (7c), a fifth power supply (7e) to adjust the voltage, and a fifth embedded system (7d).

## Patentansprüche

1. System (1) zum Steuern und Verwalten von Einkaufswagen (2), wobei das System (1) für jeden zu steuernden Wagen (2) ein ID-Endgerät (3) umfasst, wobei das ID-Endgerät (3) mit Folgendem ausgestattet ist:
- Mitteln zum Kommunizieren mit mindestens einer Wagenparkplatzeinheit (4) mit mindestens einem Ortungssystem (6) und mit mindestens einer Einheit (5) zum Erfassen des Durchfahrens des Wagens durch die Kasse,
- einer ersten Stromversorgung (3a),
- einem ersten eingebetteten System (3b) mit Speicher (3ba) zum Speichern von Daten und ID-Programmieren,
- einem ersten drahtlosen Modul (3c),
- mindestens einem IR-Emitter (3d),
- einem Münzeinführungserfasser (3e),
- einem Münzschloss (3f) und
- einem Schlüsselerfasser (3g) zum Erfassen des Schlüssels eines anderen Wagens (2), wobei der Schlüssel zum Befestigen/Lösen eines Wagens (2) an/von einem Satz verbundener Wagen (2) bestimmt ist, wobei das System (1) derart ist, dass das Münzschloss (3f) einen magnetischen Kolben (3fa) umfasst,
wobei das System (1) ferner Folgendes umfasst:
- ein Relais (3fc), wobei das erste eingebettete System dazu ausgelegt ist, dem Relais anzuordnen, den magnetischen Kolben (3fa) anzuziehen; und
- Kondensatoren (3fb) zum Versorgen des magnetischen Kolbens (3fa) mit zusätzlichem Strom,

2. System (1) zum Steuern und Verwalten von Einkaufswagen (2) nach Anspruch 1, **dadurch gekennzeichnet, dass** das ID-Endgerät (3) ferner einen Barcodeleser (3h) umfasst.

3. System (1) zum Steuern und Verwalten von Einkaufswagen (2) nach Anspruch 1 oder 2, **dadurch gekennzeichnet, dass** die erste Stromversorgung (3a) Folgendes umfasst:
- eine erste schalterbetätigte Stromversorgung (3aa) und
- einen ersten Akkumulator (3ab) und eine erste Photovoltaikeinheit (3ac) zum Versorgen der ersten schalterbetätigten Stromversorgung (3aa) mit Strom.

4. System (1) zum Steuern und Verwalten von Einkaufswagen (2) nach Anspruch 3, **dadurch gekennzeichnet, dass** die erste schalterbetätigte Stromversorgung (3aa) und das erste eingebettete System (3b) in einer Leiterplatte implementiert sind.

5. System (1) zum Steuern und Verwalten von Einkaufswagen (2) nach einem der Ansprüche 1 bis 4, **dadurch gekennzeichnet, dass** der Münzeinführungserfasser (3e) einen Grenzschalter umfasst.

6. System (1) zum Steuern und Verwalten von Einkaufswagen (2) nach einem der vorstehenden Ansprüche, wobei das System mindestens eine Wagenparkplatzeinheit umfasst, wobei das System **dadurch gekennzeichnet ist, dass** die mindestens eine Wagenparkplatzeinheit Folgendes umfasst:
- eine zweite Stromversorgung (4a),
- ein zweites eingebettetes System (4b) mit einer Uhr (4d),
- ein zweites drahtloses Modul (4c),
- eine erste Datenbank (4e) zum Speichern von Bewegungen und
- eine erste Schnittstelle (4f) zum Ausgeben von in der ersten Datenbank (4e) gespeicherten Daten.

7. System (1) zum Steuern und Verwalten von Einkaufswagen (2) nach Anspruch 6, **dadurch gekennzeichnet, dass** die zweite Stromversorgung (4a) Folgendes umfasst:
- eine zweite schalterbetätigte Stromversorgung (4aa); und
- einen zweiten Akkumulator (4ab) zum Versorgen der zweiten schalterbetätigten Versorgung (4aa) mit Strom, die einer zweiten Photovoltaikeinheit (4ac) zugeordnet ist.

8. System (1) zum Steuern und Verwalten von Einkaufswagen (2) nach einem der vorstehenden Ansprüche, wobei das System die Einheit zum Erfassen des Durchfahrens eines Wagens durch eine Kasse umfasst, wobei das System **dadurch gekennzeichnet ist, dass** die Einheit (5) zum Erfassen des Durchfahrens des Wagens durch die Kasse Folgendes umfasst: eine dritte Stromversorgung (5a), ein drittes eingebettetes System (5b), ein drittes drahtloses Modul (5c), einen IR-Empfänger (5d) zum Empfang eines Signals, das von einem IR-Emitter (3d) jedes Wagens (2) emittiert wird, eine Rechnungsempfangsverbindung (5g) zum Verbinden der Registrierkasse (21), eine zweite Datenbank (5e) zum Speichern von Kassen und eine zweite Schnittstelle (5f) zum Ausgeben von in der zweiten Datenbank (5e) gespeicherten Kassendaten.

9. System (1) zum Steuern und Verwalten von Einkaufswagen (2) nach Anspruch 8, **dadurch gekennzeichnet, dass** die Einheit (5) zum Erfassen des Durchfahrens des Wagens durch die Kasse ferner eine Verbindung (5h) mit einem CCTV-Bilderhebungssystem (20) umfasst.

10. System (1) zum Steuern und Verwalten von Einkaufswagen (2) nach einem der vorstehenden Ansprüche, wobei das System das Ortungssystem umfasst, wobei das System **dadurch gekennzeichnet ist, dass** das Ortungssystem (6) eine Vielzahl von Beacons (60) umfasst, wobei jeder davon eine vierte Stromversorgung (6a), ein viertes eingebettetes System (6b), ein viertes drahtloses Modul (6c) und eine dritte Schnittstelle (6f) umfasst.

11. System (1) zum Steuern und Verwalten von Einkaufswagen (2) nach Anspruch 10, **dadurch gekennzeichnet, dass** die vierte Stromversorgung (6a) Folgendes umfasst:
- eine vierte schalterbetätigte Stromversorgung (6aa) und
- einen vierten Akkumulator (6ab), eine dritte Photovoltaikeinheit (6ac) und/oder Mittel (6ad) zum Versorgen der vierten schalterbetätigten Stromversorgung (6aa) mit Strom.

12. System (1) zum Steuern und Verwalten von Einkaufswagen (2) nach einem der vorstehenden Ansprüche, **dadurch gekennzeichnet, dass** es ferner einen Programmierer (7) zum Programmieren von ID-Endgeräten (3) jedes Wagens (2) und/oder Beacons (60) jedes Wagens (2) umfasst.

13. System (1) zum Steuern und Verwalten von Einkaufswagen (2) nach Anspruch 12, **dadurch gekennzeichnet, dass** der Programmierer (7) eine Schnittstelle (7a) zum Eingeben manueller Daten, eine dritte Batterie (7b), ein fünftes drahtloses Modul (7c), eine fünfte Stromversorgung (7e) zum Einstellen der Spannung und ein fünftes eingebettetes System (7d) umfasst.

## Revendications

1. Système (1) de contrôle et de gestion de chariots de supermarché (2), le système (1) comprenant un terminal d'identification, ID, (3) pour chaque chariot (2) à contrôler, ledit terminal ID (3) étant équipé de :
- moyens de communication avec au moins une unité de places de stationnement de chariots (4) avec au moins un système de localisation (6) et avec au moins une unité (5) de détection du passage du chariot à la caisse,
- une première alimentation électrique (3a),
- un premier système embarqué (3b) avec mémoire (3ba) pour le stockage de données et la programmation d'ID,
- un premier module sans fil (3c),
- au moins un émetteur infrarouge, IR (3d),
- un détecteur d'introduction de pièces de monnaie (3e),
- une serrure à pièce de monnaie (3f) et
- un détecteur de clé (3g), pour détecter la clé d'un autre chariot (2), la clé étant destinée à attacher/détacher un chariot (2) à/ d'un ensemble de chariots connectés (2), le système (1) étant tel que la serrure à pièce de monnaie (3f) comprend un piston magnétique (3fa),
dans lequel le système (1) comprend en outre :
- un relais (3fc), le premier système embarqué étant adapté pour commander au relais la mise sous tension du piston magnétique (3fa) ; et
- des condensateurs (3fb) pour une alimentation électrique supplémentaire au piston magnétique (3fa).

2. Système (1) de contrôle et de gestion de chariots de supermarché (2), selon la revendication 1, **caractérisé en ce que** le terminal ID (3) comprend en outre un lecteur de code-barres (3h).

3. Système (1) de contrôle et de gestion de chariots de supermarché (2), selon les revendications 1 ou 2, **caractérisé en ce que** la première alimentation électrique (3a) comprend :
- une première alimentation électrique à découpage (3aa), et
- une première batterie rechargeable (3ab) et une première unité photovoltaïque (3ac), pour alimenter la première alimentation électrique à découpage (3aa).

4. Système (1) de contrôle et de gestion de chariots de supermarché (2), selon la revendication 3, **caractérisé en ce que** la première alimentation électrique à découpage (3aa) et le premier système embarqué (3b) sont mis en oeuvre dans une carte de circuit imprimé.

5. Système (1) de contrôle et de gestion de chariots de supermarché (2), selon l'une quelconque des revendications 1-4, **caractérisé en ce que** le détecteur d'introduction de pièces de monnaie (3e) comprend un interrupteur de fin de course.

6. Système (1) de contrôle et de gestion de chariots de supermarché (2), selon l'une quelconque des revendications précédentes, le système comprenant la au moins une unité de places de stationnement de chariots, le système étant **caractérisé en ce que** la au moins une unité de places de stationnement de chariots comprend :
- une deuxième alimentation électrique (4a),
- un deuxième système embarqué (4b) avec une horloge (4d),
- un deuxième module sans fil (4c),
- une première base de données (4e) pour le stockage des mouvements et
- une première interface (4f) pour le vidage des données stockées dans la première base de données (4e).

7. Système (1) de contrôle et de gestion de chariots de supermarché (2), selon la revendication 6, **caractérisé en ce que** la deuxième alimentation électrique (4a) comprend :
- une deuxième alimentation électrique à découpage (4aa) ; et
- une deuxième batterie rechargeable (4ab) pour alimenter la deuxième alimentation électrique à découpage (4aa), en association avec une deuxième unité photovoltaïque (4ac).

8. Système (1) de contrôle et de gestion de chariots de supermarché (2), selon l'une quelconque des revendications précédentes, le système comprenant l'unité de détection du passage d'un chariot à une caisse, le système étant **caractérisé en ce que** l'unité (5) de détection du passage du chariot à la caisse comprend : une troisième alimentation électrique (5a), un troisième système embarqué (5b), un troisième module sans fil (5c), un récepteur IR (5d) pour la réception d'un signal émis par un émetteur IR (3d) de chaque chariot (2), une connexion de reçu de facture (5 g) pour connecter la caisse enregistreuse (21), une deuxième base de données (5e) pour le stockage des passages en caisse, et une deuxième interface (5f) pour le vidage de données de passage en caisse stockées dans la deuxième base de données (5e).

9. Système (1) de contrôle et de gestion de chariots de supermarché (2), selon la revendication 8, **caractérisé en ce que** l'unité (5) de détection du passage du chariot à la caisse comprend en outre une connexion (5h) à un système de collecte d'images de CCTV, télévision à circuit fermé (20).

10. Système (1) de contrôle et de gestion de chariots de supermarché (2), selon l'une quelconque des revendications précédentes, le système comprenant le système de localisation, le système étant **caractérisé en ce que** le système de localisation (6) comprend une pluralité de balises (60), chacune d'elles comprenant une quatrième alimentation électrique (6a), un quatrième système embarqué (6b), un quatrième module sans fil (6c) et une troisième interface (6f).

11. Système (1) de contrôle et de gestion de chariots de supermarché (2), selon la revendication 10, **caractérisé en ce que** la quatrième alimentation électrique (6a) comprend :
- une quatrième alimentation électrique à découpage (6aa), et
- une quatrième batterie rechargeable (6ab), une troisième unité photovoltaïque (6ac) et/ou secteur (6ad), pour alimenter la quatrième alimentation électrique à découpage (6aa).

12. Système (1) de contrôle et de gestion de chariots de supermarché (2), selon l'une quelconque des revendications précédentes, **caractérisé en ce qu'**il comprend en outre un programmateur (7) pour la programmation de terminaux ID (3) de chaque chariot (2) et/ou de balises (60) de chaque chariot (2).

13. Système (1) de contrôle et de gestion de chariots de supermarché (2), selon la revendication 12, **caractérisé en ce que** le programmateur (7) comprend une quatrième interface (7a) pour la saisie manuelle de données, une troisième batterie (7b), un cinquième module sans fil (7c), une cinquième alimentation électrique (7e) pour régler la tension et un cinquième système embarqué (7d).
